# DEMANDE DE BREVET EUROPEEN

(11) **EP 1 702 776 A1**
(43) Date de publication de la demande: **20.09.2006**
(21) Numéro de dépôt: 06300140.8
(22) Date de dépôt: 15.02.2006
(51) Int. Cl.: B60J 1/06, B63B 19/02

(54) **Bandeau sur pare-brise**

(30) Priorité: 18.03.2005 FR 0550708
(71) Demandeur: Renault s.a.s., 92100 Boulogne Billancourt (FR)
(72) Inventeur: Gros, Christian, 78400, Chatou (FR)

(57) **Abrégé**

Pare-brise panoramique (1) offrant, grâce à des retours latéraux (1') et (1"), une visibilité latérale accrue, associé à un complément supérieur de vitrage (4), dans lequel la liaison entre ledit pare-brise panoramique (1) et ledit complément supérieur de vitrage (4) est réalisée au moyen d'un bandeau de liaison (5) comportant au moins un profilé sensiblement rigide (6).

## Description

L'invention se rapporte au domaine des pare-brise de véhicules automobiles, et, plus particulièrement, au domaine des pare-brise panoramiques.

L'invention concerne, plus spécifiquement, des pare-brise offrant à la fois une visibilité accrue sur les côtés et présentant un complément supérieur de vitrage destiné à augmenter encore la luminosité à l'intérieur de l'habitacle. La visibilité latérale des pare-brise dotés de compléments supérieurs de vitrage connus dans l'état de la technique est, en effet, généralement limitée par les montants latéraux avant de la caisse du véhicule (voir, par exemple, et de manière non limitative, le document US20040155489) sur lesquels ledit pare-brise est collé. Complémentairement, la réalisation, en série, de pare-brise panoramiques, à la fois dotés de retours latéraux, et offrant ainsi une visibilité latérale accrue, et de compléments supérieurs de vitrage, n'est pas, à ce jour, résolue industriellement.

Une solution consiste alors à réaliser, indépendamment, un pare-brise panoramique offrant une visibilité latérale accrue, et un complément supérieur de vitrage : la problématique est alors de réaliser la liaison entre ces deux parties vitrées.

On connaît, par exemple par les documents US3829152 ou US4336964, des dispositifs permettant d'offrir au conducteur et aux passagers d'un véhicule motorisé une visibilité accrue aussi bien latéralement que vers le toit dudit véhicule. Toutefois, de tels dispositifs s'adressent à des véhicules légers, de dimensions réduites et non destinés à se déplacer sur une route - typiquement, des véhicules à trois roues, utilisés pour le déplacement de personnes dans la pratique de certains sports. Les contraintes de circulation de tels véhicules autorisent ainsi l'utilisation, pour la réalisation de la partie transparente permettant la visibilité, de matériaux souples (ici des matériaux plastiques), alors qu'une telle utilisation n'est pas envisageable pour un véhicule automobile.

Dans ces véhicules légers, la zone de liaison entre la surface transparente faisant office de pare-brise et la surface transparente faisant office de toit peut ainsi être réalisée par un simple renfort de type couture.

Le document US20040075302 présente, de manière alternative, une structure complète de toit et de pare-brise pour un véhicule automobile, entièrement réalisée, en une seule pièce, à partir d'un ensemble transparent multicouches de verre et de maillages de renfort, sensiblement transparent. Dans ce dispositif, les montants latéraux avant et arrière sur lesquels les pare-brise avant et arrière sont fixés par des moyens appropriés, sont également réalisés en matériaux multicouches à partir de verre et de réseaux de renfort, sensiblement transparents. L'ensemble ainsi formé offre alors au conducteur et aux passagers dudit véhicule une visibilité accrue, notamment par la diminution des angles morts liés à la présence desdits montants latéraux avant et arrière. Un tel dispositif est toutefois d'une réalisation relativement complexe et coûteuse.

La présente invention a pour but de proposer un dispositif de pare-brise panoramique offrant une visibilité latérale accrue et associé à un complément supérieur de vitrage, dans lequel la liaison entre ledit pare-brise panoramique et ledit complément supérieur de vitrage soit simple à réaliser, peu coûteuse, d'un encombrement réduit, et présentant des caractéristiques mécaniques satisfaisantes et une bonne étanchéité.

L'invention atteint son but grâce à un bandeau de liaison entre un pare-brise panoramique présentant des retours latéraux offrant une visibilité latérale accrue et un complément supérieur de vitrage destiné à être placé sur une partie au moins du toit du véhicule, caractérisé en ce que ledit bandeau de liaison comporte au moins un profilé sensiblement rigide formant une gorge dont la section est sensiblement en forme de U, dans laquelle est insérée et fixée la partie inférieure dudit complément supérieur de vitrage, entre une branche dudit U, située vers l'intérieur du véhicule lorsque ledit pare-brise panoramique est assemblé avec ledit complément supérieur de vitrage, et une branche dudit U, située vers l'extérieur dudit véhicule lorsque ledit pare-brise panoramique est assemblé avec ledit complément supérieur de vitrage.

Avantageusement, ladite branche, située vers l'intérieur du véhicule lorsque ledit pare-brise panoramique est assemblé avec ledit complément supérieur de vitrage, dudit U formant ladite gorge dudit profilé sensiblement rigide, est légèrement plus longue que l'autre dite branche dudit U, et elle présente, vers l'intérieur du véhicule, et sur toute la longueur dudit profilé sensiblement rigide, un retour formant sensiblement une gouttière dont l'ouverture est sensiblement dirigée vers la base dudit U formant ladite gorge dudit profilé sensiblement rigide.

Dans un mode de réalisation préféré de l'invention, ledit profilé sensiblement rigide est réalisé en aluminium ou en alliage à base d'aluminium.

Avantageusement, l'invention peut également présenter une ou plusieurs des caractéristiques suivantes :
- ledit profilé sensiblement rigide comporte également, sur toute sa longueur, une plaque sensiblement plane s'étendant sensiblement depuis la partie, située vers l'intérieur du véhicule, de la surface extérieure de la base dudit U formant ladite gorge dudit profilé sensiblement rigide, et dans la direction opposée à celle des branches dudit U,
- les dimensions de ladite gouttière sont appropriées à l'engagement de l'extrémité d'une plaque permettant la fixation d'un élément de support du rétroviseur intérieur,
- lorsque l'une de ses extrémités est engagée dans ladite gouttière, l'extrémité opposée de ladite plaque de fixation est sensiblement plaquée contre ladite plaque sensiblement plane dudit profilé sensiblement rigide, ladite plaque sensiblement plane comportant des moyens appropriés à la mise en place et au maintien de ladite plaque de fixation,
- les dimensions de ladite gouttière sont également aptes à l'engagement d'une baguette d'extrémité d'un store d'occultation dudit complément supérieur de vitrage), lorsque ledit store d'occultation est en position baissée,
- un profilé souple, de forme appropriée, dont la longueur est sensiblement égale à la largeur de la partie supérieure dudit pare-brise panoramique, et formant une gorge dont la section est sensiblement en forme de U, dans laquelle est insérée et fixée la partie supérieure dudit pare-brise panoramique, est adjoint audit profilé sensiblement rigide,
- ledit profilé souple comporte, sur toute sa longueur, et s'étendant sensiblement perpendiculairement depuis la surface extérieure de la base dudit U formant ladite gorge, une languette apte à pivoter autour de sa base rattachée audit profilé.
Avantageusement, l'invention s'étend en outre également à un procédé d'assemblage d'un pare-brise panoramique et d'un complément supérieur de vitrage au moyen d'un bandeau de liaison présentant une ou plusieurs des caractéristiques évoquées ci-dessus, dans lequel la partie inférieure dudit complément supérieur de vitrage est insérée dans ladite gorge dudit profilé sensiblement rigide et la partie supérieure dudit pare-brise panoramique est insérée dans ladite gorge dudit profilé souple, et dans lequel ledit profilé souple coopère avec ledit profilé sensiblement rigide au moyen de ladite languette dudit profilé souple.

D'autres caractéristiques et avantages de l'invention ressortiront à la lecture de la description qui suit, en référence aux figures annexées dans lesquelles :
- la figure 1 est une demi vue schématique en perspective d'un pare-brise incorporant un bandeau de liaison selon l'invention,
- la figure 2 est une coupe schématique, selon le plan de symétrie longitudinal du véhicule, du bandeau de liaison du pare-brise selon l'invention,
- la figure 3 est une vue en coupe agrandie du détail du bandeau de liaison selon l'invention.

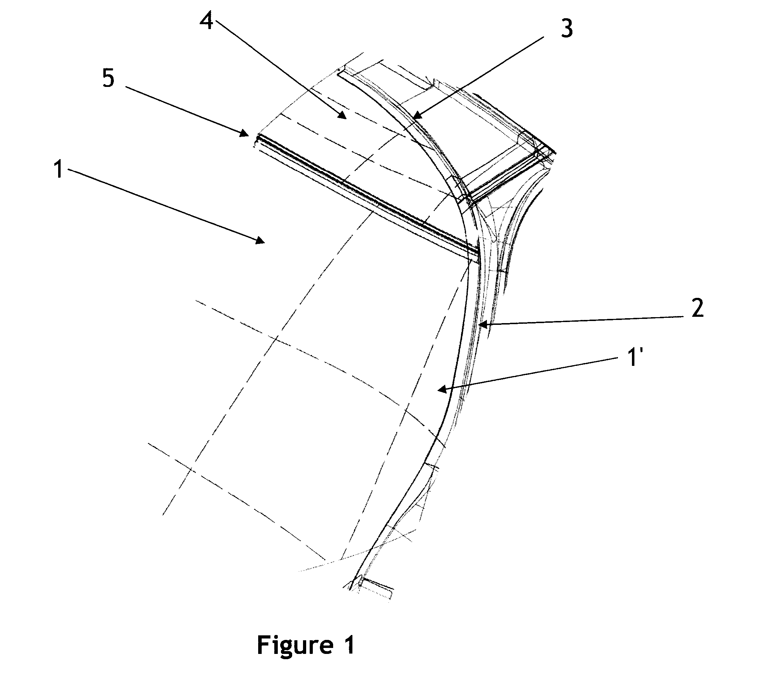

La figure 1 présente schématiquement un pare-brise panoramique 1 offrant une visibilité latérale accrue par l'existence de retours latéraux vitrés 1' et 1" (ledit retour latéral 1" est symétrique dudit retour latéral 1' par rapport à l'axe longitudinal du véhicule, et n'est ainsi pas représenté sur la demi vue de la figure 1). Ledit pare-brise panoramique 1 est fixé, par des moyens appropriés, sur des montants latéraux 2 de la caisse du véhicule, eux-mêmes solidaires d'une traverse supérieure 3 du pavillon dudit véhicule. Selon un mode d'assemblage connu dans l'état de la technique, ledit pare-brise panoramique 1 est généralement collé sur lesdits montants latéraux 2.

Le pare-brise panoramique 1 est associé à un complément supérieur de vitrage 4 s'étendant sensiblement vers l'arrière du véhicule sur une partie au moins du toit dudit véhicule. Ledit complément supérieur de vitrage 4 est fixé, par des moyens appropriés (généralement, mais de manière non exclusive, par collage), à ladite traverse supérieure de pavillon 3.

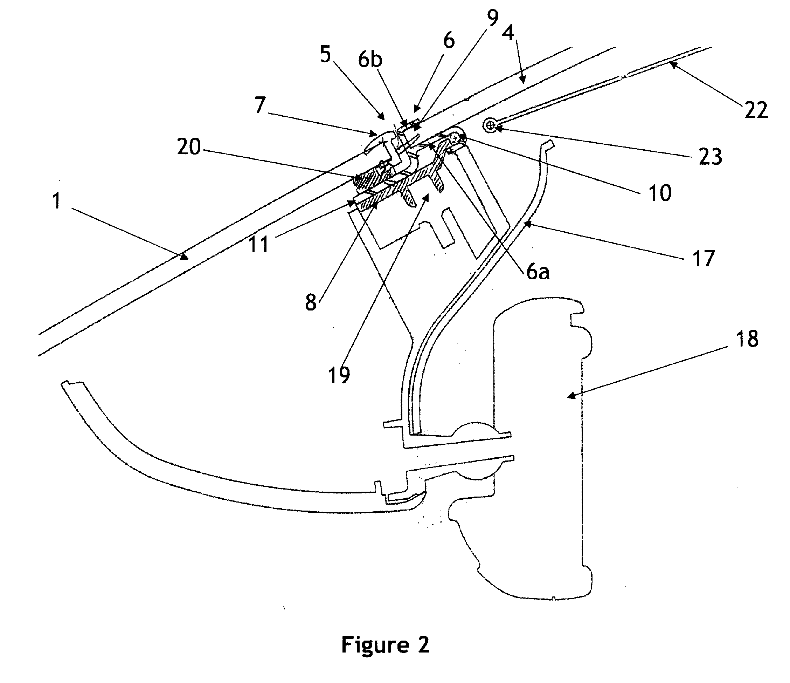

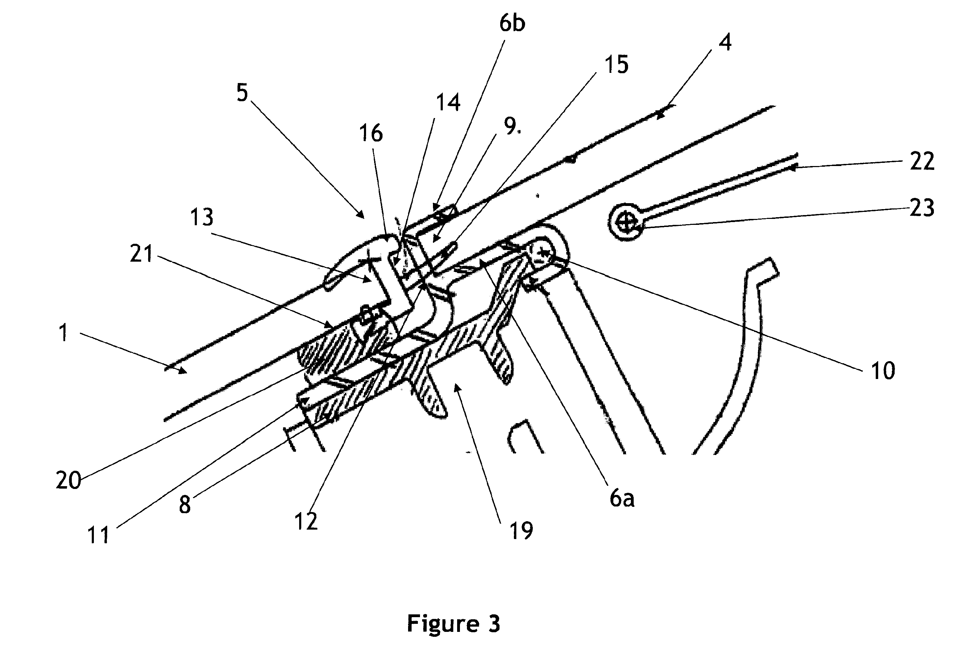

Dans l'invention, ledit pare-brise panoramique 1 et ledit complément supérieur de vitrage 4 sont liés par un bandeau de liaison 5 dont une coupe, selon le plan de symétrie longitudinal du véhicule, dans la position d'assemblage avec ledit pare-brise panoramique 1 et ledit complément supérieur de vitrage 4, est présentée par les figures 2 et 3. Dans ce qui suit, l'invention sera donc décrite dans la position assemblée dudit pare-brise panoramique 1 avec ledit complément supérieur de vitrage 4.

Ledit bandeau de liaison 5 selon l'invention comporte principalement : un profilé sensiblement rigide 6, réalisé dans un matériau léger et présentant une certaine rigidité mécanique, un profilé souple 7 réalisé dans un matériau élastomère, et une plaque 8.

Ledit profilé sensiblement rigide 6, de préférence, mais de manière non exclusive, réalisé en aluminium ou dans un alliage à base d'aluminium, a une longueur sensiblement égale à la largeur de la partie inférieure dudit complément supérieur de vitrage 4, destinée à être liée audit pare-brise panoramique 1, et forme sensiblement, sur toute sa longueur, une gorge 9 en forme de U dans laquelle est insérée et fixée, par des moyens appropriés, ladite partie inférieure dudit complément supérieur de vitrage 4.

La branche 6a, située vers l'intérieur du véhicule, du U formant ladite gorge 9, est légèrement plus longue que l'autre branche 6b dudit U, et présente, vers l'intérieur dudit véhicule, et sur toute la longueur dudit profilé sensiblement rigide 6, un retour formant sensiblement une gouttière 10 dont l'ouverture est sensiblement dirigée vers la base dudit U formant ladite gorge 9, et dont les dimensions la rendent apte à coopérer avec une partie de ladite plaque 8 précédemment mentionnée, et ainsi qu'il sera ultérieurement décrit.

Ledit profilé sensiblement rigide 6 comporte également une plaque sensiblement plane 11 s'étendant, sur toute la longueur dudit profilé sensiblement rigide 6, sensiblement depuis la partie de la surface extérieure 12 de la base dudit U formant ladite gorge 9 située vers l'intérieur du véhicule, et dans la direction opposée à celle desdites branches 6a et 6b dudit U.

Dans un mode de réalisation préféré de l'invention, les différentes parties dudit profilé sensiblement rigide 6 ont une épaisseur de l'ordre de quelques millimètres, ladite plaque sensiblement plane 11 étant légèrement plus épaisse que le reste dudit profilé sensiblement rigide 6 : typiquement, mais de manière non limitative, ladite plaque sensiblement plane 11 a une épaisseur d'environ 2 millimètres, les autres parties formant ledit profilé sensiblement rigide 6 présentant une épaisseur d'environ 1 à 1.5 millimètres.

Ledit profilé souple 7, réalisé dans un matériau élastomère (par exemple, et de manière non limitative : en caoutchouc), a une longueur sensiblement égale à celle de la partie supérieure dudit pare-brise panoramique 1 destinée à être liée audit complément supérieur de vitrage 4, et forme une gorge 13 sensiblement en forme de U, dans laquelle ladite partie supérieure dudit pare-brise panoramique 1 est insérée et fixée. Ledit profilé souple 7 comporte en outre, sur toute sa longueur, partant de la surface extérieure 14 de la base du U formant ladite gorge 13 et s'étendant sensiblement perpendiculairement à celle-ci, une languette 15 dont l'élasticité lui permet de pivoter autour de sa base rattachée à ladite surface extérieure 14. Ladite surface extérieure 14 de ladite base dudit U formant ladite gorge 13 dudit profilé souple 7 présente, en outre, sur son côté situé vers l'extérieur du véhicule, un renflement 16 dont le rôle sera décrit de manière plus détaillé ultérieurement.

Ladite plaque 8, dont la longueur est sensiblement égale à la largeur d'un élément 17 destiné au support du rétroviseur intérieur 18, comporte un ensemble 19 approprié à la fixation dudit rétroviseur intérieur 18 : par exemple et de manière non limitative, ledit ensemble 19 peut être un ensemble de trous taraudés et filetages.

Lors de l'assemblage dudit pare-brise panoramique 1 avec ledit complément supérieur de vitrage 4, ladite partie inférieure dudit complément supérieur de vitrage 4 est insérée et fixée, ainsi qu'il a été mentionné précédemment, dans ladite gorge 9 dudit profilé sensiblement rigide 6. De même, et ainsi qu'il a été également mentionné précédemment, ladite partie supérieure dudit pare-brise panoramique 1 est insérée et fixée dans ladite gorge 13 dudit profilé souple 7. Selon un mode de réalisation connu dans l'état de la technique, lesdites parties inférieure dudit complément de vitrage 4 et supérieure dudit pare-brise panoramique 1 sont collées dans lesdites gorges 9 et 13 respectivement desdits profilés sensiblement rigide 6 et souple 7.

Lorsque ledit pare-brise panoramique 1 et ledit complément supérieur de vitrage 4 sont rapprochés l'un de l'autre pour être assemblés au moyen dudit bandeau de liaison 5, ladite surface extérieure 14 de la base du U formant ladite gorge 13 dudit profilé souple 7 est placée au regard de ladite surface extérieure 12 de la base dudit U formant ladite gorge 9 dudit profilé sensiblement rigide 6, ladite languette 15 pivotant alors autour de sa base et étant alors écrasée entre lesdites surfaces extérieures 12 et 14, de manière à assurer l'étanchéité de l'assemblage. Cette étanchéité est complétée par la présence dudit renflement 16 précédemment mentionné, dont la forme est appropriée à une obturation de l'espace libre situé entre lesdites surfaces extérieures 12 et 14, espace libre dimensionné pour ménager les jeux nécessaires à l'assemblage dudit pare-brise panoramique 1 et dudit complément supérieur de vitrage 4 au moyen dudit bandeau de liaison 5. Il est à noter que, par un tel montage, les éléments visibles depuis l'extérieur du véhicule sont réduits au minimum, ce qui favorise l'esthétique perçue de l'ensemble dudit véhicule.

Ledit profilé sensiblement rigide 6 est, alors, rendu solidaire dudit pare-brise panoramique 1 au moyen d'un joint de colle 20, placé entre la face intérieure 21 de la partie supérieure dudit pare-brise panoramique 1 et la face de ladite plaque sensiblement plane 11 placée au regard de ladite face 21 : ledit profilé sensiblement rigide 6 assure ainsi une liaison sensiblement rigide dudit pare-brise panoramique 1 avec ledit complément supérieur de vitrage 4.

Une extrémité de ladite plaque 8, de forme appropriée, peut alors être engagée dans ladite gouttière 10 précédemment décrite, sensiblement vers le milieu de la longueur dudit profilé sensiblement rigide 6, de manière à permettre la mise en place dudit élément 17 supportant ledit rétroviseur intérieur 18, l'autre extrémité de ladite plaque 8, de forme appropriée, étant alors sensiblement plaquée contre la face de ladite plaque sensiblement plane 11 opposée audit joint de colle 20. Il est à noter que ladite plaque sensiblement plane 11 comporte des moyens appropriés (non détaillés sur les figures : par exemple, et de manière non limitative, un trou taraudé, ou un trou lisse) destinés à coopérer avec des moyens appropriés correspondants (non détaillés sur les figures : par exemple, et de manière non limitative, une vis, ou un rivet) placés sur ladite plaque 8 et permettant la fixation de ladite plaque 8 sur ladite plaque sensiblement plane 11, ladite plaque 8 pouvant également, dans des modes de réalisation alternatifs, être collée sur ladite plaque sensiblement plane 11. Ledit élément 17 supportant ledit rétroviseur intérieur 18 peut alors, par l'intermédiaire dudit ensemble approprié 19 (non détaillé sur les figures), être fixé sur ledit bandeau de liaison 5 selon l'invention, celui-ci remplissant ainsi, outre sa fonction de liaison précédemment décrite, la fonction de support dudit rétroviseur intérieur 18.

Ledit bandeau de liaison 5 selon l'invention peut également remplir une fonction supplémentaire de maintien des rideaux d'occultation 22 dudit complément supérieur de vitrage 4, par exemple en cas de fort ensoleillement. En effet, ladite gouttière 10 s'étendant, ainsi qu'il a été précédemment décrit, sur tout la longueur dudit profilé sensiblement rigide 6, et seule sa partie sensiblement centrale étant occupée par ladite plaque 8 de fixation dudit rétroviseur intérieur 18, la baguette d'extrémité 23 d'un store d'occultation 22 peut venir s'engager dans ladite gouttière 10, de dimensions appropriées, afin d'assurer le maintien dudit store d'occultation 22 dans sa position d'occultation.

L'invention permet ainsi, non seulement d'assurer une liaison simple, étanche, et peu visible depuis l'extérieur du véhicule, entre un pare-brise panoramique offrant une visibilité latérale accrue et un complément supérieur de vitrage, mais permet également la fixation du rétroviseur intérieur dudit véhicule, ainsi que le maintien, en position d'occultation, des stores d'occultation dudit complément supérieur de vitrage, limitant ainsi au maximum le nombre d'éléments placés dans l'habitacle, et dégageant un maximum de volume dans ledit habitacle, au niveau du pare-brise.

Il est également à noter en outre qu'un tel dispositif met en oeuvre des composants simples, dont le coût de réalisation est limité, et pouvant être facilement réalisés en grande série.

## Revendications

1. Bandeau de liaison (5) entre un pare-brise panoramique (1) présentant des retours latéraux (1') et (1") offrant une visibilité latérale accrue et un complément supérieur de vitrage (4) destiné à être placé sur une partie au moins du toit du véhicule, ledit bandeau de liaison (5) comporte au moins un profilé sensiblement rigide (6) formant une gorge (9) dont la section est sensiblement en forme de U, dans laquelle est insérée et fixée la partie inférieure dudit complément supérieur de vitrage (4), entre une branche (6a) dudit U, située vers l'intérieur du véhicule, et une branche (6b) dudit U, située vers l'extérieur du véhicule **caractérisé en ce que** ladite branche (6a), située vers l'intérieur du véhicule lorsque ledit pare-brise panoramique (1) est assemblé avec ledit complément supérieur de vitrage (4), dudit U formant ladite gorge (9), est légèrement plus longue que l'autre branche (6b), située vers l'extérieur dudit véhicule, dudit U, et qu'elle présente, vers l'intérieur dudit véhicule, et sur toute la longueur dudit profilé sensiblement rigide (6), un retour formant sensiblement une gouttière (10) dont l'ouverture est sensiblement dirigée vers la base dudit U formant ladite gorge (9).

2. Bandeau de liaison (5) selon la revendication 1, **caractérisé en ce que** ledit profilé sensiblement rigide (6) comporte également une plaque sensiblement plane (11) s'étendant, sur toute la longueur dudit profilé sensiblement rigide (6), sensiblement depuis la partie, située vers l'intérieur du véhicule lorsque ledit pare-brise panoramique (1) est assemblé avec ledit complément supérieur de vitrage (4), de la surface extérieure (12) de la base dudit U formant ladite gorge (9), et dans la direction opposée à celle des branches dudit U.

3. Bandeau de liaison (5) selon l'une quelconque des revendications précédentes, **caractérisé en ce que** les dimensions de ladite gouttière (10) sont appropriées à l'engagement de l'extrémité d'une plaque (8) permettant la fixation d'un élément (17) de support du rétroviseur intérieur (18).

4. Bandeau de liaison (5) selon l'une quelconque des revendications précédentes, **caractérisé en ce que**, lorsque l'une de ses extrémités est engagée dans ladite gouttière (10), l'extrémité opposée de ladite plaque (8) est sensiblement plaquée contre ladite plaque sensiblement plane (11).

5. Bandeau de liaison (5) selon l'une quelconque des revendications précédentes, **caractérisé en ce que** les dimensions de ladite gouttière (10) sont également aptes à l'engagement d'une baguette (23) d'extrémité d'un store (22) d'occultation dudit complément supérieur de vitrage (4), lorsque ledit store d'occultation (22) est en position baissée.

6. Bandeau de liaison (5) selon l'une quelconque des revendications précédentes, **caractérisé en ce que** ledit profilé sensiblement rigide (6) est réalisé en aluminium ou en alliage à base d'aluminium.

7. Bandeau de liaison (5) selon l'une quelconque des revendications précédentes, **caractérisé en ce qu'**il comprend également un profilé souple (7) formant une gorge (13) dont la section est sensiblement en forme de U, dans laquelle est insérée et fixée la partie supérieure dudit pare-brise panoramique (1).

8. Bandeau de liaison (5) selon la revendication 7, **caractérisé en ce que** ledit profilé souple (7) comporte en outre, sur toute sa longueur, partant de la surface extérieure (14) de la base du U formant ladite gorge (13) et s'étendant sensiblement perpendiculairement à celle-ci, une languette (15) apte à pivoter autour de sa base rattachée à ladite surface extérieure (14) et à être écrasée, lors de l'assemblage dudit pare-brise panoramique (1) avec ledit complément supérieur de vitrage (4), entre ladite surface extérieure (14) et ladite surface extérieure (12) de la base dudit U formant ladite gorge (9).

9. Procédé d'assemblage d'un pare-brise panoramique (1) et d'un complément supérieur de vitrage (4) au moyen d'un bandeau de liaison (5) selon l'une quelconque des revendications 1 à 8, **caractérisé en ce que** la partie inférieure dudit complément de vitrage (4) est insérée dans ladite gorge (9) dudit profilé sensiblement rigide (6) et la partie supérieure dudit pare-brise panoramique est insérée dans ladite gorge (13) dudit profilé souple (7) ; et **en ce que** la partie supérieure dudit complément supérieur de vitrage (4) est fixée à une traverse de pavillon (3) et ledit profilé souple (7) coopère avec ledit profilé sensiblement rigide (6) au moyen de ladite languette (15).
